(19) Europäisches Patentamt
European Patent Office
Office européen des brevets

(11) **EP 3 599 455 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **18186099.0**

(22) Anmeldetag: **27.07.2018**

(51) Internationale Patentklassifikation (IPC):
**G01N 15/02** (2006.01)       **G01N 15/14** (2006.01)
**G01N 15/00** (2006.01)

(52) Gemeinsame Patentklassifikation (CPC):
**G01N 15/0205; G01N 15/0227; G01N 15/1436; G01N 15/147;** G01N 2015/0053; G01N 2015/0294; G01N 2015/1452; G01N 2015/1493; G01N 2015/1497

(54) **VORRICHTUNG UND VERFAHREN ZUR ANALYSE VON PARTIKELN**

DEVICE AND METHOD FOR DETECTING PARTICLES

DISPOSITIF ET PROCÉDÉ D'ANALYSE DES PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.01.2020   Patentblatt 2020/05**

(73) Patentinhaber:
• **Heraeus Quarzglas GmbH & Co. KG 63450 Hanau (DE)**
• **Leibniz-Institut für Photonische Technologien e.V. 07745 Jena (DE)**

(72) Erfinder:
• **WEIDLICH, Stefan 55116 Mainz (DE)**
• **SCHMIDT, Markus 07743 Jena (DE)**

(74) Vertreter: **Staudt, Armin Walter Sandeldamm 24a 63450 Hanau (DE)**

(56) Entgegenhaltungen:
**WO-A1-2016/038015     WO-A1-2016/038108 JP-A- 2006 125 901     US-A1- 2014 296 089**

## Beschreibung

### Technischer Hintergrund

Die Erfindung betrifft eine Vorrichtung nach Anspruch 1 zur Analyse von Partikeln, umfassend

- eine Glas-Kapillare als Messzelle mit einem Hohlkanal zur Aufnahme oder zur Durchleitung einer die Partikel enthaltenden Messprobe, der eine Hohlkanal-Längsachse und eine Hohlkanal-Innenwandung aufweist,
- eine Lichtquelle zur Erzeugung eines Lichtstrahls und eine optische Einrichtung zur Einkopplung des Lichtstrahls an einer Einkoppelstelle in den Hohlkanal zwecks Beleuchtung der Messprobe, wobei der Lichtstrahl bei Eintritt in den Hohlkanal einen Einstrahlwinkel Φ bezüglich der Hohlkanal-Längsachse von weniger als 2 Grad hat, und
- einen Detektor zur Erfassung von aus dem Hohlkanal austretendem Streulicht.

Außerdem betrifft die Erfindung ein Verfahren nach Anspruch 11 zur Analyse von Partikeln, umfassend die folgenden Verfahrensschritte:

- Breitstellen einer Messzelle in Form einer Glas-Kapillare mit einem eine Hohlkanal-Längsachse und eine Hohlkanal-Innenwandung aufweisenden Hohlkanal,
- Einbringen einer die Partikel enthaltenden Messprobe in den Hohlkanal, wobei die Messprobe einen Brechungsindex $\Delta n_M$ aufweist
- Erzeugen eines Lichtstrahls mittels einer Lichtquelle,
- Einkoppeln des Lichtstrahls an einer Einkoppelstelle in den Hohlkanal zwecks Beleuchtung der Messprobe mittels einer optischen Einkoppel-Einrichtung, wobei der Lichtstrahl bei Eintritt in den Hohlkanal einen Einstrahlwinkel Φ bezüglich der Hohlkanal-Längsachse von weniger als 2 Grad hat, und
- Erfassen von aus dem Hohlkanal austretendem Streulicht mittels eines Detektors.

### Stand der Technik

Methoden zur Charakterisierung einer Probe in einem fluiden Medium sind in der medizinischen und biologischen Grundlagenforschung sowie als Routinediagnostikmethode in zahlreichen Medizinalbereichen in Kliniken üblich.

Eine gebräuchliche Methode ist die Durchflusszytometrie, bei der das an Teilchen gestreute Licht analysiert wird. Sie erfordert wenig apparativen Aufwand und ist grundsätzlich für eine kostengünstige Analytik einsetzbar. Eine dafür geeignete Streulicht-Messanordnung ist aus der DE 10 2013 210 259 A1 bekannt. Die Durchfluss-Messzelle ist dabei in Form eines Quarzglas-Hohlzylinders mit zentraler Längsbohrung ausgestattet. Durch die Bohrung wird ein Flüssigkeitsstrom mit den zu charakterisierenden Teilchen geleitet und mit einem Laserstrahl beleuchtet, der über den Hohlzylinder-Mantel eingestrahlt wird. Um die zylinderförmige Messzelle herum sind unter verschiedenen Winkeln Detektoren angeordnet, die das Streulicht aufnehmen. Die in der Flüssigkeit enthaltenen Moleküle oder kolloidalen Substanzen werden beispielsweise hinsichtlich Größe, Masse oder Struktur analysiert.

Dabei ergibt sich jedoch häufig wegen eines hohen Hintergrundsignals mit einem schlechten Signal-zu-Rausch-Verhältnis eine geringe Messempfindlichkeit. Daher ist es oftmals notwendig Fluoreszenzlicht anstelle von Streulicht zu betrachten, um ein stärkeres Signal zu erlangen, welches vom Untergrund abgelöst werden kann. Die wenigsten Probenteilchen jedoch zeigen natürliche Fluoreszenz, weshalb in diesen Fällen eine Präparation der Proben mit Erweiterung um eine fluoreszierende Gruppe notwendig ist.

Eine höhere Messempfindlichkeit ergibt sich bei einer Analysevorrichtung und einem Analyseverfahren gemäß der eingangs genannten Gattung, wie in der WO 2016/038015 A1 beschrieben. Als Messzelle wird hier ein lichtführender Hohlkanal eingesetzt, in den stirnseitig das die Lichtstreuung anregende Beleuchtungslicht eingekoppelt wird. Der Hohlkanal liegt im Kern eines Lichtwellenleiters aus Quarzglas mit radial inhomogenem Brechzahlverlauf, so dass das eingekoppelte Beleuchtungslicht durch Totalreflektion entlang der Hohlkanal-Längsachse im Faserkern und zu einem gewissen Anteil auch im Hohlkanal selbst propagiert.

Das durch die Hohlkanal-Wandung austretende Streulicht wird von einem Detektor erfasst. Dieser ist beispielsweise zum Messen der kohärenten Streuintensität des Streulichts, der inkohärenten Streuintensität des Streulichts, der spektralen Verteilung des Streulichts, der räumlichen Verteilung des Streulichts und / oder der dynamischen Bewegung der zu messenden Partikel ausgelegt. Ergänzend dazu kann der Detektor auch zum Erfassen von Fluoreszenz-Streulicht ausgelegt sein, das durch die Beleuchtung der zu messenden Partikel erzeugt wird.

Der auf einen Öffnungsquerschnitt von weniger als 0,2 $\mu$m$^2$ begrenzte Hohlkanal wird mit Flüssigkeit gefüllt, die die zu untersuchenden Partikel enthält. Die Natur der Wechselwirkung zwischen Licht und Materie bewirkt, dass das Beleuchtungslicht wenig im Quarzglas aber deutlich stärker an den in der Flüssigkeit befindlichen Partikeln streut. Das gestreute Mess-Licht wird mittels einer Kamera aufgefangen und zur Analyse prozessiert. Eine kleine Kern-Querschnittsfläche und ein großer Brechzahlunterschied zwischen Kern und Mantel begünstigen den räumlichen Einschluss des Beleuchtungslichts im Kernbereich des Lichtwellenleiters und verbessern die Ausleuchtung des Hohlkanals. Es wird erwähnt, dass der Hohlkanal als Kapillare ausgebildet sein kann. Eine ähnliche Analysevorrichtung und ein Analyseverfahren beschreibt die WO 2016/038108 A1.

Aus der JP 2006125901 A ist eine Messeinrichtung für die Kapillarelektrophorese bekannt, bei der zur zweidimensionalen Erfassung einer Messprobe mehrere Quarzglas-Kapillaren in einem gemeinsamen Kapillararray angeordnet sind und das mittels eines Mehrfachfokus-Beleuchtungssystems Laserlicht aus zwei unterschiedlichen Richtung eingestrahlt wird. Die Laserbestrahlungspositionen bilden dabei eine gemeinsame Linie. Das Laserlicht wird so aufgeteilt, dass beide Seiten jedes Arrays mit hocheffizientem Laserlicht bestrahlt werden können. Um Intensitätsschwankungen zwischen den Kapillaren des zweidimensionalen Detektors aufgrund von Schwankungen der Beleuchtungseffizienz und der Positionsabhängigkeit der Linsenempfindlichkeit der Detektoren zu vermindern, befinden sich die Erfassungsendflächen der Kapillaren in der Nähe der Mittelachse einer Kondensorlinse.

Aus der US 2014/296089 A1sind Messysteme für die Elektrophorese bekannt, wobei über die Länge einer mit einer Pufferlösung und einer Messprobe gefüllten Kapillare ein elektrisches Feld im Kilovoltbereich angelegt wird. Die Partikel der Messproben wandern innerhalb des elektrischen Feldes zum Ende mit niedrigem Potential und werden während der Migration elektrophoretisch getrennt und dabei mit einem Detektor nachgewiesen. Die Kanallänge für die Kapillarelektrophorese wird so gewählt, dass sie für eine korrekte Trennung der Spezies wirksam ist. Der Innendurchmesser der Kapillaren ist nicht kritisch. Im Allgemeinen können Kapillaren einen Innendurchmesser von etwa 5-300 Mikrometern haben. Sie bestehen typischerweise aus elektrisch nichtleitendem Material wie zum Beispiel aus Quarzglas.

Technische Aufgabenstellung

Die Messgeschwindigkeit bei derartigen Analysemethoden wird durch den Öffnungsquerschnitt des Hohlkanals limitiert. Dieser ist gemäß der WO 2016/038015 A1 auf weniger als 0,2 $\mu m^2$ begrenzt. Im Vergleich zu einem derartig engen Hohlkanal kann eine Kapillare mit einem vergleichsweise großen Durchmesser im Bereich einiger Mikrometer nicht nur eine höhere Messgeschwindigkeit, sondern auch die Durchführung mehrerer paralleler Messungen und die Detektion größerer Partikel ermöglichen.

Von daher wäre der Einsatz einer Kapillare als Hohlkanal bei der Analyse von Partikeln, wie beispielsweise bei der Durchflusszytometrie, grundsätzlich wünschenswert, wirft jedoch eine Vielzahl anderer technischer Probleme, wie etwa die Realisierung eines ausreichend hohen Signal-Rausch-Verhältnisses, auf, die im Stand der Technik weder angesprochen noch gelöst sind.

Der Erfindung liegt daher die Aufgabe zugrunde, eine Vorrichtung zur Analyse von Partikeln zur Verfügung zu stellen, bei der eine Kapillare als Messzelle einsatzbar ist, und die eine verlässliche, reproduzierbare Messung mit hohem Signal-Rausch-Verhältnis ermöglicht.

Außerdem liegt der Erfindung die Aufgabe zugrunde, ein Verfahren zur Analyse von Partikeln anzugeben, das eine verlässliche, reproduzierbare Messung mit hohem Signal-Rausch-Verhältnis erlaubt.

Zusammenfassung der Erfindung

Hinsichtlich der Vorrichtung wird diese Aufgabe ausgehend von einer Vorrichtung der eingangs genannten Gattung erfindungsgemäß dadurch gelöst, dass

- dass der Hohlkanal einen Innendurchmesser $D_H$ im Bereich von 10 $\mu m$ bis 60 $\mu m$ aufweist, und

- dass der Lichtstrahl eine radiale Lichtintensitätsverteilung mit einem minimalen Strahldurchmesser $D_L$ hat, wobei für das Durchmesserverhältnis $D_L/D_H$ gilt: $0,05 < D_L/D_H < 2,00$.

Bei der erfindungsgemäßen Analyse-Vorrichtung ist die Messzelle als Glas-Kapillare ausgeführt, deren Innenbohrung den Hohlkanal zur Aufnahme oder zur Durchleitung der zu analysierenden Messprobe bildet. Die Messprobe ist dabei im Hohlkanal eingeschlossen oder sie wird im Durchfluss durch den Hohlkanal geleitet.

Die Glas-Kapillare ist im einfachsten Fall als Hohlzylinder aus optisch einheitlichem Glasmaterial ausgeführt, so dass die Kapillar-Wandung einen radial homogenen Brechzahlverlauf aufweist. Der Hohlkanal bei der erfindungsgemäßen Messzelle verfügt daher im Unterschied zu der bekannten Messzelle nicht über eine auf Totalreflexion beruhenden und zur Ausleuchtung des Hohlkanals beitragenden Lichtführung in Form einer optischen Wellenleiterstruktur. Eine derartige Wellenleiterstruktur einer Hohlzylinder-Wandung könnte eine Lichtführung ermöglichen, die theoretisch lateral zur Hohlzylinderachse dissipationsfrei wäre und damit eine homogene Ausleuchtung in der durch die Hohlzylinder-Innenwand gebildeten Innenbohrung über eine lange Strecke ermöglichen würde. Eine Kapillare einheitlichen Brechzahlverlaufes (wie hier) führt jedoch im Allgemeinen kein Licht im Innenvolumen des durch die Kapillar-Wandung gebildeten Hohlkanals. Um dennoch eine Messung mit hohem Signal-Rausch-Verhältnis und hoher Mess-Empfindlichkeit zu erreichen, sind eine effiziente Einkopplung des Lichtstrahls in den Hohlkanal und für die Anwendung hinreichend geringe Übertragungsverluste anzustreben.

Daher ist bei der hier präsentierten Vorrichtung vorgesehen, durch Auswahl und Einstellung konstruktiver Maßnahmen zur Strahlführung Licht derart in den Hohlkanal einzubringen, dass sich definierte Intensitätsprofile in der Normalebene zur Hohlkanal-Längsachse ausbilden, sogenannte Moden, die entlang der Hohlkanal-Längsachse geführt werden, jedoch physikalisch intrinsisch einem Energieverlust durch eine laterale Dissipation von Energie unterliegen. Um diesen Energieverlust zu minimieren, ist zu gewährleisten, dass die Einkopplung des Lichtes in den Kapillar-Hohlkanal derart durchgeführt wird, dass ein großer Anteil der Leistung, insbesondere der größte Anteil der Leistung, in der sogenannten Grundmode geführt wird. Die Intensitätsverteilung der Grundmose trägt zum einen zu einer im Vergleich zu allen anderen möglichen Moden besonders homogenen Ausleuchtung des Hohlkanal-Volumens bei, so dass eine besonders störungsfreie Messung der zu analysierenden Partikel ermöglicht wird. Zum anderen wird hierdurch gewährleistet, dass das Licht entlang der Kapillar-Längsachse und insbesondere entlang einer vorgegebenen Messstrecke mit möglichst geringem Verlust geführt wird. Ursache hierfür ist, dass die Verluste durch Energiedissipation quer zur Hohlkanal-Längsachse für die Grundmode niedriger sind als für alle anderen Moden.

Ferner vermindert die vorzugsweise Einstrahlung der Lichtleistung in die Grundmode den unerwünschten Effekt des sogenannten "Modenmischens". Dabei kommt es entlang eines Lichtleiters zu einem Verteilen der Lichtenergie von einer Mode auf eine andere Mode. Dies führt zu einem entlang der Lichtleiter-Längsachse variierendem Intensitätsprofil innerhalb dessen Normalebene, wobei die genaue Bestimmung des Intensitätsprofiles durch eine Fülle von Faktoren erschwert wird. Die Kenntnis dieses Intensitätsprofiles ist jedoch für die Qualifizierung der zu analysierenden Partikel hilfreich.

Die oben erwähnten konstruktiven Maßnahmen werden im Folgenden näher erläutert:

(1) Die vergleichsweise schwache Lichtführung im Hohlkanal der Kapillare führt zu einer hohen Lichtdämpfung des eingekoppelten Lichtstrahls. Es hat sich gezeigt, dass die Dämpfung vom Kapillar-Innendurchmesser abhängt und umso höher ist, je kleiner der Innendurchmesser ist.

Der Hohlkanal weist daher einen Innendurchmesser $D_H$ im Bereich von 10 $\mu$m bis 60 $\mu$m auf. Bei einem Hohlkanal-Innendurchmesser von weniger als 10 $\mu$m ergibt sich eine hohe Lichtdämpfung, die die Durchführung einer verlässlichen, reproduzierbaren Messung mit hohem Signal-Rausch-Verhältnis erschwert. Vorzugsweise beträgt der Hohlkanal-Innendurchmesser daher mindestens 20 $\mu$m. Der Hohlkanal enthält die zu analysierenden Probenteilchen, die sich in dem zur Verfügung stehenden Hohlkanal-Volumen frei bewegen können. Die Beweglichkeit in lateraler Richtung (senkrecht zur Hohlkanal-Längsachse) ist durch den Hohlkanal-Innendurchmesser begrenzt. Bei einem Hohlkanal-Innendurchmesser von mehr als 60 $\mu$m sind das Volumen und insbesondere die Teilchen-Beweglichkeit in lateraler Richtung so groß, dass eine zuverlässige Erfassung durch den Detektor wegen limitierter Tiefenschärfe erschwert wird.

Der von der Lichtquelle erzeugte Lichtstrahl tritt an einer stirnseitigen Einkoppelstelle in den Hohlkanal ein (=stirnseitige Öffnung des Hohlkanals), und beim weiteren Propagieren durch den Hohlkanal wird er an den darin enthaltenen Probenteilchen unter Abgabe von Streulicht gestreut und dabei gedämpft. Das Streulicht wird mittels des Detektors erfasst. Die Streulicht-Erfassung kann direkt an der Einkoppelstelle einsetzen, wobei dort aber zusätzliche Reflexionen und parasitäre Streueffekte auftreten, was eine exakte Erfassung der Teilchenstreuung und deren Auswertung erschwert. Daher ist der Beginn der Streulicht-Erfassung bevorzugt in Einstrahlrichtung gesehen der Einkoppelstelle nachgeordnet, beispielsweise über eine Länge von mindestens 2 mm.

Als "Streulicht" wird hier dasjenige Beleuchtungs-Licht verstanden, das den Hohlkanal durch die Kapillar-Wandung verlässt und das vom Detektor erfasst wird. Die Wandung ist transparent für das Beleuchtungslicht.

(2) Für die Übertragung des Lichtstrahls von der Lichtquelle zur Einkoppelstelle ist eine optische Übertragungseinrichtung vorgesehen. Diese umfasst beispielsweise eine optische Faser oder eine Anordnung optischer Bauteile zur Übertragung eines Freistrahls. Die Einkopplung des Lichtstrahls in den Hohlkanal wird maßgeblich von der numerischen Apertur (im Folgenden als "NA" bezeichnet) der optischen Übertragungseinrichtung und vom Durchmesserverhältnis von minimale Strahldurchmesser und Hohlkanal-Innendurchmesser bestimmt. Bei der erfindungsgemäßen Vorrichtung wird eine optische Übertragungseinrichtung mit vergleichsweise kleiner NA eingesetzt. Dies zeigt sich darin, dass der Lichtstrahl eine radiale Lichtintensitätsverteilung mit einem minimalen Strahldurchmesser $D_L$ aufweist, der in etwa so groß ist, wie der Innendurchmesser $D_H$ des Hohlkanals, genauer gesagt gilt für das Durchmesserverhältnis $D_L/D_H$ der Zusammenhang: $0{,}05 < D_L/D_H < 2{,}00$, vorzugsweise: $0{,}1 < D_L/D_H < 1{,}00$ und besonders bevorzugt: $0{,}2 < D_L/D_H < 0{,}5$.

Der minimale Strahldurchmesser $D_L$ wird im Fall eines Freistrahls von der Taillenbreite im Strahlfokus bestimmt und bei einer Faserzuführung vom Kerndurchmesser am Lichtaustrittsende der Lichtleitfaser.

Der Abstand zwischen der Ebene mit minimalem Strahldurchmesser $D_L$ und der stirnseitigen Öffnung des Hohlkanals ist möglichst klein; er beträgt bevorzugt weniger als 10 mm und liegt im Idealfall bei Null.

(3) Die oben unter (2) erläuterte Maßnahme ist grundsätzlich durch eine hinreichend starke Fokussierung des Lichtstrahls erreichbar. Eine starke Fokussierung geht jedoch mit einer hohen Divergenz des Lichtstrahls einher. Es hat sich aber gezeigt, dass ein kleiner Divergenzwinkel erforderlich und dementsprechend eine geringe Fokussierung des Lichtstrahls anzustreben ist. Denn trifft der Lichtstrahl in einem flachen Winkel auf die stirnseitige Öffnung des Hohlkanals, so wird in Abhängigkeit vom Einstrahlwinkel ein Teil des Lichtes an der Hohlkanal-Innenwandung reflektiert und ein anderer Teil wird in die Kapillarwand eindringen und die Kapillare energieverlustreich als Verlustlicht verlassen. Zu Gunsten eines hohen Anteils an reflektiertem Licht und möglichst wenig Verlustlicht und damit einhergehend einer möglichst großen Erfassungslänge, hat der Lichtstrahl bei Eintritt in den Hohlkanal einen Einstrahlwinkel von weniger als 2 Grad, und vorzugsweise weniger als 1 Grad. Als Einstrahlwinkel wird hierbei der hohlkanalseitige Akzeptanzwinkel definiert (entspricht dem halben Öffnungswinkel).

Die Anforderungen hinsichtlich eines vergleichsweise geringen Strahldurchmessers einerseits und eines geringen Divergenzwinkels andererseits stehen in einem gewissen Widerspruch zueinander. Die Kombination dieser Maßnahmen bei der erfindungsgemäßen Vorrichtung bewirkt jedoch die weiter oben erläuterte Strahlführung, bei der ein hoher Anteil der eingekoppelten Lichtleitung in die Grundmode überführt wird.

In dem Zusammenhang wird eine Ausführungsform der Vorrichtung bevorzugt, bei der die Glas-Kapillare aus Quarzglas besteht.

Quarzglas ist über einen breiten Wellenlängenbereich zwischen etwa 150 nm und 3000 nm weitgehend transparent. Somit ermöglicht die Glas-Kapillare eine Beleuchtungsstrahlung mit Wellenlängen im Bereich von UV bis Infrarot, und zwar bei kleinem Streubeitrag durch die Kapillar-Wandung. Darüber hinaus erleichtert der Werkstoff Quarzglas auch bei Hohlkanälen mit kleinem Öffnungsquerschnitt die Realisierung besonders glatter Innenwandungen durch ein verhältnismäßig großes Temperaturintervall, in welchem die Kapillare durch Heißumformung gezogen werden kann. Das Quarzglas der Kapillare kann undotiert sein. Es kann auch einen oder mehrere Dotierstoffe enthalten.

Der Brechungsindex des Glases $\Delta n_K$ der Kapillare ist vorzugsweise abgestimmt auf den Brechungsindex $\Delta n_M$ der gemäß Spezifikation oder einer anderen Einsatzvorgabe aufzunehmenden Messprobe. $\Delta n_K$ ist vorzugsweise größer, und besonders bevorzugt um mindestens 0,1 größer als $\Delta n_M$ (jeweils gemessen bei der Messwellenlänge: 532 nm und der Messtemperatur: 20 °C). Die Messprobe ist in der Regel in einem wässrigen Medium aufgenommen. Für den Brechungsindex von Wasser gegen Luft werden in der Literatur Werte um 1,33 (Messparameter wie oben genannt) angegeben. Der Brechungsindex von Quarzglas liegt bei etwa 1,45, so dass eine Kapillare aus Quarzglas die obige bevorzugte Bemessungsregel $\Delta n_M < \Delta n_K - 0,1$ grundsätzlich erfüllt.

Im Hinblick auf geringe Übertragungsverluste im Hohlkanal hat es sich bewährt, wenn die Glas-Kapillare möglichst nicht gebogen ist, sondern im Gegenteil, über ihre Gesamtlänge, insbesondere mindestens über die Signal-Erfassungslänge, gerade ist. Als "gerade" wird hier ein Verlauf verstanden, bei dem die Positionen der Kapillar-Längsachse am Anfang und am Ende der Signal-Erfassungslänge in einer Projektion senkrecht zur Einstrahlrichtung einen Abstand von weniger als 1 mm voneinander haben. Die Signal-Erfassungslänge entspricht demjenigen Längenabschnitt der Kapillare, entlang dem eine Streulicht-Erfassung vorgesehen ist, dieser Längenabschnitt beträgt mindestens 2 mm und maximal 20 cm - gemessen von der Einkoppelstelle.

Der unerwünschte Effekt der "Modenmischung" wird auch durch Biegungen der Kapillare und lokal wirkende mechanische Zug- oder Druckspannungen verstärkt. Durch Einstellung einer hohen Biegesteifheit beziehungsweise eines ausreichend hohen Flächenträgheitsmoments, insbesondere hervorgerufen durch eine große Dicke der Kapillar-Wandung, können mechanische Spannungen aufgenommen und Biegungen unterdrückt werden.

Andererseits kann die Hohlkanal-Wandung Streuzentren enthalten und sie trägt zur optischen Dämpfung des vom Detektor zu erfassenden Streulichts bei.

Es hat sich daher bewährt, wenn die Glas-Kapillare eine Hohlkanal-Wandung mit einer Wandstärke von mindestens 100 $\mu$m, mindestens 500 $\mu$m und vorzugsweise mindestens 1000 $\mu$m sowie eine Wandstärke von maximal 10 mm, maximal 5 mm und vorzugsweise maximal 2 mm aufweist, wobei die Hohlkanal-Wandung in radialer Richtung gesehen einen homogenen Brechzahlverlauf aufweist.

Bei einer besonders bevorzugten Ausführungsform ist die optische Einrichtung als Multimode- oder als Singlemode-Lichtleitfaser mit einem Faserkern und einem den Faserkern umhüllenden Mantel ausgebildet, und wobei die optische Faser eine numerische Apertur NA aufweist, für die gilt: NA < 0,05.

Die atypisch geringe NA der Lichtleitfaser erleichtert die Realisierung eines möglichst flachen Einstrahlwinkels und trägt insoweit zur Verbesserung der Einkoppeleffizienz und Führung des Lichtstrahls im Kapillar-Hohlkanal bei.

Die in einer multimodalen Lichtleitfaser geführten Lichtmoden haben in der Messprobe unterschiedliche Brechungsindizes und werden unterschiedlich gedämpft. Für die einzige Mode der unimodalen Lichtleitfaser können die Parameter für die Einkopplung optimiert werden, so dass sich eine vergleichsweise höhere Einkoppeleffizienz, insbesondere in die Grundmode der Kapillare, ergibt.

Unabhängig davon erweist es sich insbesondere im Hinblick auf eine hohe Einkoppeleffizienz als nützlich, wenn die optische Faser einen Modenfelddurchmesser $D_{M\,aufweist}$, der im Verhältnis zum Innendurchmesser $D_H$ des Hohlkanals in folgendem Zusammenhang steht: $0,05 < D_M/D_H < 2,00$, vorzugsweise: $0,1 < D_M/D_H < 1,00$ und besonders bevorzugt: $0,2 < D_M/D_H < 0,5$.

Der Modenfelddurchmesser ist ein Parameter zur Kennzeichnung der Lichtverteilung der Grundmode in der Singlemodefaser. Bei einer durch eine Gaußkurve approximierbaren radialen Lichtintensitätsverteilung ist der Modenfelddurchmesser derjenige, bei dem die Amplitude der Lichtintensität auf 1/e abgefallen ist (etwa 37 %).

Der Detektor ist vorzugsweise so ausgelegt, dass er das Streulicht entlang einer Signal-Erfassungslänge erfasst, deren Länge mindestens 2 mm und maximal 20 cm ab der Einkoppelstelle beträgt.

Bei Erfassungslängen von mehr als 20 cm wird eine homogene Ausleuchtung des Probenvolumens durch die Dämpfung des Lichtstrahls entlang der Erfassungslänge erschwert.

Im Hinblick auf eine höhere Messgenauigkeit erweist es sich als günstig, wenn der Hohlkanal einen Innenquerschnitt mit mindestens einer Abflachung aufweist und/oder dass die Kapillare einen Außenquerschnitt mit mindestens einer Abflachung aufweist hat.

Bei einem runden Innenquerschnitt und einem runden Außenquerschnitt ist das Messfenster, durch das der Detektor das Streulicht erfasst gekrümmt. Die Krümmung führt zu Verzerrungen der Abbildung und unerwünschten Ablenkungen des Streulichts beziehungsweise zu optischen Fehlern in der Abbildung und muss bei der Auswertung berücksichtigt werden. Die Auswertung wird vereinfacht, wenn mindestens die innere oder mindestens die äußere Messfenster-Begrenzungsfläche eben ist, und ist besonders, wenn beide Messfenster-Begrenzungsflächen eben sind. Dies wird durch eine einseitige oder beidseitige Abflachung der Kapillar-Wandung erreicht. Die einseitige oder beidseitige Abflachung ist auch durch einen polygonalen Innen- und/oder Außenquerschnitt erreichbar.

Bei einer besonders bevorzugten Ausführungsform der Vorrichtung ist der Hohlkanal in einem plattenförmigen Körper mit sich gegenüberliegenden Flachseiten ausgebildet, wobei die Flachseiten des Körpers Außenwandungen der Kapillare bilden.

Der plattenförmige Körper hat beispielsweise Rechteckform, insbesondere die Form eines Mikroskop-Objektträgers, und er zeichnet sich vorzugsweise durch hohe Biegesteifigkeit aus. Der plattenförmige Körper bildet die Kapillare oder die Kapillare ist in dem plattenförmigen Körper integriert. Sie kann innerhalb der Rechteckform beispielsweise in Längsrichtung verlaufen.

Kapillaren werden in der Regel durch Elongieren eines Hohlzylinders erzeugt. Dabei können sich sowohl an der Hohlkanal-Innenwandung als auch an der Kapillar-Außenwandung Ziehstreifen und andere Oberflächenstrukturen ausbilden, die Störungen im Messweg der Streulichtmessung darstellen und durch Reflexion und Streuung das Messergebnis beeinträchtigen. Um Verfälschungen durch parasitäre Streueffekte und Grenzflächen möglichst zu vermeiden, wird eine möglichst glatte Hohlkanal-Innenwandung angestrebt, eine Oberflächenrauigkeit aufweist, die definiert ist durch eine mittlere Rautiefe $R_a$ von weniger als 1 nm.

Vorteilhafterweise weist auch die Kapillar-Außenwandung eine Oberflächenrauigkeit auf, die definiert ist durch eine mittlere Rautiefe $R_a$ von weniger als 1 nm.

Die Messung der Rautiefe erfolgt durch Rasterkraftmikroskopie (AFM-Mikroskopie; atomic force microscope). Aus den Messwerten wird die mittlere Rautiefe gemäß der DIN 4768 (2010 bestimmt.

Hinsichtlich des Verfahrens zur Analyse von Partikeln wird die oben genannte technische Aufgabe erfindungsgemäß durch ein Verfahren gelöst, das folgende Verfahrensschritte umfasst:

- es wird eine Messzelle eingesetzt, bei der der Hohlkanal einen Innendurchmesser $D_H$ im Bereich von 10 μm bis 60 μm aufweist, und
- der Lichtstrahl hat eine radiale Lichtintensitätsverteilung mit einem minimalen Strahldurchmesser $D_L$, wobei für das Durchmesserverhältnis DL/DH gilt: 0,05<DL/DH<2.

Beim erfindungsgemäßen Analyse-Verfahren ist die Messzelle als Glas-Kapillare ausgeführt, deren Innenbohrung den Hohlkanal zur Aufnahme oder zur Durchleitung der zu analysierenden Messprobe bildet. Die Messprobe ist dabei im Hohlkanal eingeschlossen oder sie wird im Durchfluss durch den Hohlkanal geleitet.

Die Glas-Kapillare ist im einfachsten Fall als Hohlzylinder aus optisch einheitlichem Glasmaterial ausgeführt, so dass die Kapillar-Wandung einen radial homogenen Brechzahlverlauf aufweist. Der Hohlkanal verfügt daher im Unterschied zu der bekannten Messzelle nicht über eine auf Totalreflexion beruhenden und zur Ausleuchtung des Hohlkanals beitragenden Lichtführung in Form einer optischen Wellenleiterstruktur. Eine derartige Wellenleiterstruktur einer Hohlzylinder-Wandung könnte eine Lichtführung ermöglichen, die theoretisch lateral zur Hohlzylinderachse dissipationsfrei wäre und damit eine homogene Ausleuchtung in der durch die Hohlzylinder-Innenwand gebildeten Innenbohrung über eine lange Strecke ermöglichen würde. Eine Kapillare einheitlichen Brechzahlverlaufes - wie hier - führt jedoch im Allgemeinen kein Licht im Innenvolumen des durch die Kapillar-Wandung gebildeten Hohlkanals. Um dennoch eine Messung mit hohem Signal-Rausch-Verhältnis und hoher Mess-Empfindlichkeit zu erreichen, sind eine effiziente Einkopplung des Lichtstrahls in den Hohlkanal und für die Anwendung hinreichend geringe Übertragungsverluste anzustreben.

Daher ist beim erfindungsgemäßen Verfahren vorgesehen, durch Auswahl und Einstellung konstruktiver Maßnahmen zur Strahlführung Licht derart in den Hohlkanal einzubringen, dass sich definierte Intensitätsprofile in der Normalebene zur Hohlkanal-Längsachse ausbilden, sogenannte Moden, die entlang der Hohlkanal-Längsachse geführt werden, jedoch physikalisch intrinsisch einem Energieverlust durch eine laterale Dissipation von Energie unterliegen. Um diesen Energieverlust zu minimieren, ist zu gewährleisten, dass die Einkopplung des Lichtes in den Kapillar-Hohlkanal derart durchgeführt wird, dass ein großer Anteil der Leistung, insbesondere der größte Anteil der Leistung, in der sogenannten Grundmode geführt wird. Die Intensitätsverteilung der Grundmose trägt zum einen zu einer im Vergleich zu allen anderen möglichen Moden besonders homogenen Ausleuchtung des Hohlkanal-Volumens bei, so dass eine besonders störungsfreie Messung der zu analysierenden Partikel ermöglicht wird. Zum anderen wird hierdurch gewährleistet, dass das Licht entlang der Kapillar-Längsachse und insbesondere entlang einer vorgegebenen Messstrecke mit möglichst geringem Verlust geführt wird. Ursache hierfür ist, dass die Verluste durch Energiedissipation quer zur Hohlkanal-Längsachse für die Grundmode niedriger sind als für alle anderen Moden.

Ferner vermindert die vorzugsweise Einstrahlung der Lichtleistung in die Grundmode den unerwünschten Effekt des sogenannten "Modenmischens". Dabei kommt es entlang eines Lichtleiters zu einem Verteilen der Lichtenergie von einer Mode auf eine andere Mode. Dies führt zu einem entlang der Lichtleiter-Längsachse variierendem Intensitätsprofil innerhalb dessen Normalebene, wobei die genaue Bestimmung des Intensitätsprofiles durch eine Fülle von Faktoren erschwert wird. Die Kenntnis dieses Intensitätsprofiles ist jedoch für die Qualifizierung der zu analysierenden Partikel hilfreich.

Die oben erwähnten konstruktiven Maßnahmen werden im Folgenden näher erläutert:

(1) Die vergleichsweise schwache Lichtführung im Hohlkanal der Kapillare führt zu einer hohen Lichtdämpfung des eingekoppelten Lichtstrahls. Es hat sich gezeigt, dass die Dämpfung vom Kapillar-Innendurchmesser abhängt und umso höher ist, je kleiner der Innendurchmesser ist.

Der Hohlkanal weist daher einen Innendurchmesser $D_H$ im Bereich von 10 $\mu$m bis 60 $\mu$m auf. Bei einem Hohlkanal-Innendurchmesser von weniger als 10 $\mu$m ergibt sich eine hohe Lichtdämpfung, die die Durchführung einer verlässlichen, reproduzierbaren Messung mit hohem Signal-Rausch-Verhältnis erschwert. Vorzugsweise beträgt der Hohlkanal-Innendurchmesser daher mindestens 20 $\mu$m.

Der Hohlkanal enthält die zu analysierenden Probenteilchen, die sich in dem zur Verfügung stehenden Hohlkanal-Volumen frei bewegen können. Die Beweglichkeit in lateraler Richtung (senkrecht zur Hohlkanal-Längsachse) ist durch den Hohlkanal-Innendurchmesser begrenzt. Bei einem Hohlkanal-Innendurchmesser von mehr als 60 $\mu$m sind das Volumen und insbesondere die Teilchen-Beweglichkeit in lateraler Richtung so groß, dass eine zuverlässige Erfassung durch den Detektor wegen limitierter Tiefenschärfe erschwert wird.

Der von der Lichtquelle erzeugte Lichtstrahl tritt an einer stirnseitigen Einkoppelstelle in den Hohlkanal ein (=stirnseitige Öffnung des Hohlkanals), und beim weiteren Propagieren durch den Hohlkanal wird er an den darin enthaltenen Probenteilchen unter Abgabe von Streulicht gestreut und dabei gedämpft. Das Streulicht wird mittels des Detektors erfasst. Die Streulicht-Erfassung kann direkt an der Einkoppelstelle einsetzen, wobei dort aber zusätzliche Reflexionen und parasitäre Streueffekte auftreten, was eine exakte Erfassung der Teilchenstreuung und deren Auswertung erschwert. Daher ist der Beginn der Streulicht-Erfassung bevorzugt in Einstrahlrichtung gesehen der Einkoppelstelle nachgeordnet, beispielsweise über eine Länge von mindestens 2 mm.

Als "Streulicht" wird hier dasjenige Beleuchtungs-Licht verstanden, den Hohlkanal durch die Kapillar-Wandung verlässt und das vom Detektor erfasst wird. Die Wandung ist transparent für das Beleuchtungslicht.

(2) Für die Übertragung des Lichtstrahls von der Lichtquelle zur Einkoppelstelle ist eine optische Übertragungseinrichtung vorgesehen. Diese umfasst beispielsweise eine optische Faser oder eine Anordnung optischer Bauteile zur Übertragung eines Freistrahls. Die Einkopplung des Lichtstrahls in den Hohlkanal wird maßgeblich von der numerischen Apertur (im Folgenden als "NA" bezeichnet) der optischen Übertragungseinrichtung und vom Durchmesserverhältnis von minimalem Strahldurchmesser und Hohlkanal-Innendurchmesser bestimmt. Beim erfindungsgemäßen Verfahren wird eine optische Übertragungseinrichtung mit vergleichsweise kleiner NA eingesetzt. Dies zeigt sich darin, dass der Lichtstrahl eine radiale Lichtintensitätsverteilung mit einem minimalen Strahldurchmesser $D_L$ aufweist, der in etwa so groß ist, wie der Innendurchmesser $D_H$ des Hohlkanals, genauer gesagt gilt für das Durchmesserverhältnis $D_L/D_H$ der Zusammenhang: $0{,}05 < D_L/D_H < 2{,}00$, vorzugsweise:

$0{,}1 < D_L/D_H < 1{,}00$ und besonders bevorzugt: $0{,}2 < D_L/D_H < 0{,}5$.

Der minimale Strahldurchmesser $D_L$ wird im Fall eines Freistrahls von der Taillenbreite im Strahlfokus bestimmt und bei einer Faserzuführung vom Kerndurchmesser am Lichtaustrittsende der Lichtleitfaser.

Der Abstand zwischen der Ebene mit minimalem Strahldurchmesser $D_L$ und der stirnseitigen Öffnung des Hohlkanals ist möglichst klein; er beträgt bevorzugt weniger als 10 mm und liegt im Idealfall bei Null.

(3) Die oben unter (2) erläuterte Maßnahme ist grundsätzlich durch eine hinreichend starke Fokussierung des Lichtstrahls erreichbar. Eine starke Fokussierung geht jedoch mit einer hohen Divergenz des Lichtstrahls einher. Es hat sich aber gezeigt, dass ein kleiner Divergenzwinkel erforderlich und dementsprechend eine geringe Fokussierung des Lichtstrahls anzustreben ist. Denn trifft der Lichtstrahl in einem flachen Winkel auf die stirnseitige Öffnung des Hohlkanals, so wird in Abhängigkeit vom Einstrahlwinkel ein Teil des Lichtes an der Hohlkanal-Innenwandung reflektiert und ein anderer Teil wird in die Kapillarwand eindringen und die Kapillare energieverlustreich als Verlustlicht verlassen. Zu Gunsten eines hohen Anteils an reflektiertem Licht und möglichst wenig Verlustlicht und damit einhergehend einer möglichst großen Erfassungslänge, hat der Lichtstrahl bei Eintritt in den Hohlkanal einen Einstrahlwinkel von weniger als 2 Grad, und vorzugsweise weniger als 1 Grad.

Als Einstrahlwinkel wird hierbei der hohlkanalseitige Akzeptanzwinkel definiert (entspricht dem halben Öffnungswinkel).

Die Anforderungen hinsichtlich eines vergleichsweise geringen Strahldurchmessers einerseits und eines geringen Divergenzwinkels andererseits stehen in einem gewissen Widerspruch zueinander. Die Kombination dieser Maßnahmen beim erfindungsgemäßen Verfahren bewirkt jedoch die weiter oben erläuterte Strahlführung, bei der ein hoher Anteil der eingekoppelten Lichtleistung in die Grundmode überführt wird.

Vorteilhafte Ausgestaltungen des erfindungsgemäßen Verfahrens ergeben sich aus den abhängigen Ansprüchen. Soweit in den abhängigen Ansprüchen angegebene Ausgestaltungen des Verfahrens den in Ansprüchen zur erfindungsgemäßen Vorrichtung genannten Ausführungsformen nachgebildet sind, wird zur ergänzenden Erläuterung auf die obigen Ausführungen zu den entsprechenden Vorrichtungsansprüchen verwiesen. Andere spezifische Ausgestaltungen des erfindungsgemäßen Verfahrens werden nachfolgend näher erläutert.

So hat es sich eine Verfahrensvariante als besonders günstig erwiesen, bei der die Messprobe einen Brechungsindex $\Delta n_M$ und das Glas der Kapillare einen Brechungsindex $\Delta n_K$ aufweist, wobei gilt: $\Delta n_M < \Delta n_K$, vorzugsweise $\Delta n_M < \Delta n_K - 0,1$.

Der Brechungsindex des Glases $\Delta n_K$ der Kapillare ist abgestimmt auf den Brechungsindex $\Delta n_M$ der aufzunehmenden Messprobe. Insbesondere ist $\Delta n_K$ vorzugsweise größer, und besonders bevorzugt um mindestens 0,1 größer als $\Delta n_M$ (Messwellenlänge: 532 nm; Messtemperatur von 20 °C). Die Messprobe ist in der Regel in einem wässrigen Medium aufgenommen. Für den Brechungsindex von Wasser gegen Luft werden in der Literatur Werte um 1,33 (Messparameter wie oben genannt) angegeben. Der Brechungsindex von Quarzglas liegt bei etwa 1,45, so dass eine Kapillare aus Quarzglas die obige bevorzugte Bemessungsregel $\Delta n_M < \Delta n_K - 0,1$ grundsätzlich erfüllt.

Die erfindungsgemäße Analyse-Vorrichtung und das erfindungsgemäße Analyse-Verfahren sind für die Durchführung von Analysen von Partikeln im medizinischen und nicht-medizinischen Bereich einsetzbar, insbesondere in der Durchflusszytometrie. Dabei werden Flüssigkeiten durch eine Küvette geleitet und die darin enthaltenen Moleküle oder kolloidalen Substanzen hinsichtlich Größe, Masse oder Struktur analysiert. Bei der optischen Analyse wird ein Lichtstrahl auf den Flüssigkeitsstrom fokussiert, so dass einzelne Moleküle analysiert werden können. Mithilfe dieser Methode lassen sich hohe Messzahlen pro Zeiteinheit (größer 1000 Messereignisse pro Sekunde) und damit schnell statistisch solide Rückschlüsse auf die Probe erzielen.

Ausführungsbeispiele

Nachfolgend wird die Erfindung anhand von Ausführungsbeispielen und einer Zeichnung näher erläutert. Im Einzelnen zeigt

| | |
|---|---|
| **Figur 1** | einen prinzipiellen Messaufbau bei der Durchflusszytometrie unter Einsatz einer erfindungsgemäßen Vorrichtung, |
| **Figur 2** | die Glas-Kapillare mit Hohlkanal in einer Draufsicht auf eine Stirnseite in schematischer Darstellung, |
| **Figur 3** | eine Skizze zur Erläuterung der Einkopplung eines Lichtstrahls in den Hohlkanal der Kapillare, |
| **Figur 4** | ein Diagramm zur Erläuterung der Einkoppeleffizienz im Zusammenhang mit dem Hohlkanal-Innenradius und dem Strahldurchmesser, |
| **Figur 5** | ein Diagramm zur Erläuterung der Abhängigkeit der effektiven Brechzahl vom Radius des Hohlkanals, |
| **Figur 6** | ein Diagramm zur Erläuterung der Abhängigkeit des Reflexionswinkels der Grundmode der Kapillare vom Radius des Hohlkanals, |
| **Figur 7** | ein Diagramm zur Erläuterung der Abhängigkeit der numerischen Apertur (NA) vom Radius des Hohlkanals, und |
| **Figur 8** | ein Diagramm zur Erläuterung der optischen Dämpfung des Lichtstrahls vom Radius des Hohlkanals. |

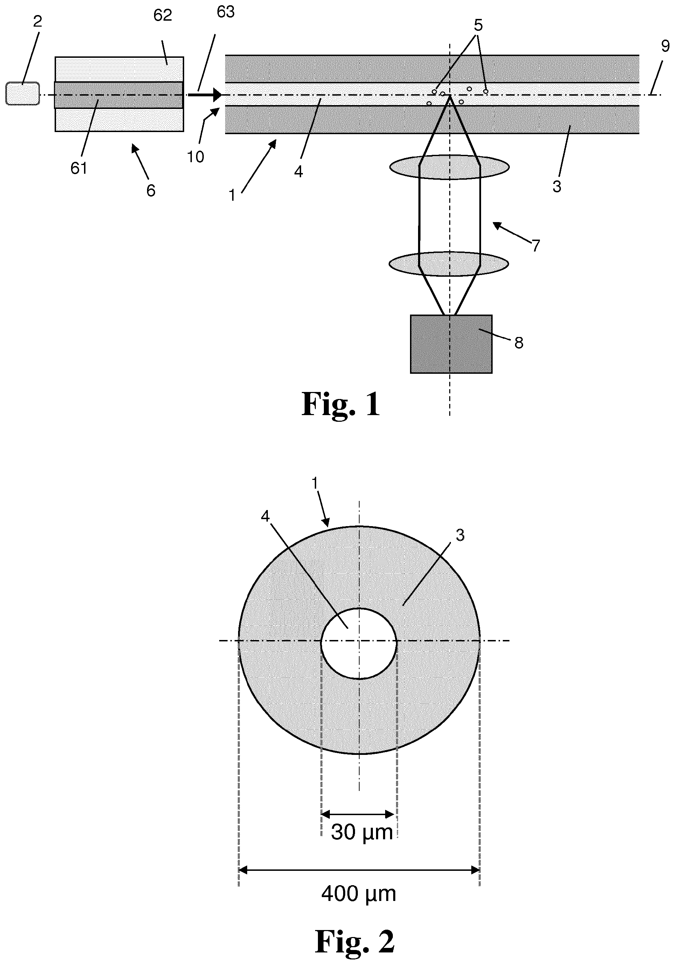

**Figur 1** zeigt einen prinzipiellen Messaufbau bei der Durchflusszytometrie unter Einsatz der erfindungsgemäßen Vorrichtung.

Das Messprinzip basiert auf der optischen Detektion gestreuten, fluoreszierenden oder anderweitig als Konsequenz der Beleuchtung eines Probenteilchens emittierten Lichtes. Die Detektion kann dabei aber muss nicht zwingend orts-, frequenz- oder intensitätsselektiv erfolgen. Mit Hilfe einer entsprechenden Auswerteoptik und -algorithmik lassen sich somit Eigenschaften der untersuchten Probeteilchen wie Größe, Form, Diffusionsgeschwindigkeiten, Beweglichkeiten oder Streuquerschnitte aufnehmen.

Beim Messaufbau von Figur 1 wird eine Durchfluss-Messzelle gemäß der Erfindung in Form einer Quarzglas-Kapillare 1 mit einer Wandung 3 und einem Hohlkanal 4 eingesetzt. Durch den Hohlkanal 4 wird ein Flüssigkeitsstrom geleitet, der die zu charakterisierenden Probeteilchen 5 enthält. Der Flüssigkeitsstrom wird mittels einer Lichtquelle in Form eines frequenzverdoppelten Nd:YAG-Lasers beleuchtet. Das Laserlicht mit einer Wellenlänge von 532 nm wird über eine optische Faser 6 zur Quarzglas-Kapillare 1 geführt und tritt als Lichtstrahl 63 an der stirnseitigen Einkoppelstelle 10 in den Hohlkanal 4 ein.

Die optische Faser 6 ist als Singlemode-Faser ausgelegt. Sie verfügt über einen Kern 61 und einen den Kern umgebenden Mantel 62, wobei der Brechungsindex des Kerns 61 höher ist als der Brechungsindex des Mantels 62, so dass das Laserlicht durch Totalreflexion im Wesentlichen im Kern 61 geführt wird.

Der Kern 61 hat einen Durchmesser von 10 $\mu$m, und der Modenfelddurchmesser beträgt 7 $\mu$m.

Alternativ zu monochromem Laserlicht wird eine polychrome Anregungsstrahlung eingesetzt.

Alternativ zur Singlemode-Faser wird eine Multimode-Faser eingesetzt. Auch diese verfügt über einen Kern und einen den Kern umgebenden Mantel, wobei der Brechungsindex des Kerns höher ist als der Brechungsindex des Mantels, so dass das Laserlicht durch Totalreflexion im Wesentlichen im Kern 61 geführt wird.

Der Kern hat hierbei einen Durchmesser von 10 $\mu$m, wobei der Brechzahlsprung zwischen Mantel und Kern im Vergleich zur Ausführung als Monomodenfasern höher ist.

Die Kapillare 1 ist mit einem herkömmlichen mikroskopischen Aufbau 7 gekoppelt, der eine Kamera 8 umfasst, deren Fokus oder Erfassungsebene im Bereich der Hohlkanal-Mittelachse 9 liegt und mittels der die Messprobe und die darin enthaltenen Probeteilchen 5 beobachtet und der Datenauswertung übergeben werden. Dabei wird die elastische Lichtstreuung (Rayleighstreuung) detektiert, die von den Probeteilchen als Streulicht mit derselben Frequenz wie der Anregungsfrequenz abgestrahlt werden. Aufgrund der geringen Dämpfung der Kapillare 1 entsteht kaum Hintergrundstreuung im Fasermaterial selbst. Die Erfassungslänge, innerhalb der die Kamera 8 das gestreute Licht erfassen kann, liegt zwischen 2 mm0 und 20cm. Über diese Länge erstreckt sich die Kapillare 1 vollkommen gerade.

Das heißt, dass die Positionen der Kapillar-Längsachse 9 am Anfang und am Ende dieser Länge in der Projektion senkrecht zur Einstrahlrichtung (63) einen Abstand von weniger als 1 mm voneinander haben.

Mittels der als Detektor dienenden sCMOS-Kamera 8 kann die kohärente Streuintensität des Streulichts, die inkohärente Streuintensität des Streulichts, die spektrale Verteilung des Streulichts, die räumliche Verteilung des Streulichts und/oder die dynamische Bewegung der zu messenden Partikel 5 erfasst werden. Ergänzend dazu ist die Kamera auch zum Erfassen von Fluoreszenz-Streulicht ausgelegt, das durch die Beleuchtung der zu messenden Partikel erzeugt wird.

**Figur 2** zeigt schematisch die Draufsicht auf die Stirnseite der Messzelle in Form der Quarzglas-Kapillare 1 mit der Wandung 3 und dem Hohlkanal 4. Die Kapillar-Wandung 3 besteht aus synthetisch erzeugtem, undotiertem Quarzglas mit einem Brechungsindex von 1,4607. Dieser Wert beruht auf einer Messung mit einer Lichtwellenlänge von 532 nm und einer Messtemperatur von 20 °C. Diese Messbedingungen liegen auch den im Folgenden genannten Brechungsindex-Werten zugrunde, sofern nicht ausdrücklich anderes gesagt ist.

Die Kapillare 1 hat einen Außendurchmesser von 400 $\mu$m. Der Hohlkanal 4 hat einen Durchmesser von 30 $\mu$m. Der Hohlkanal 4 verläuft koaxial zur Kapillar-Mittelachse 9 (siehe Figur 1) und zur Hauptausbreitungsrichtung des Laser-Lichtstrahls 63. Der Mantel 3 weist keine Grenzflächen oder andere strukturelle Unstetigkeiten oder Inhomogenitäten auf, die zu nennenswerter Streuung beitragen würden.

Die Kapillare 1 wird durch Elongieren eines Hohlzylinder aus dem synthetisch erzeugten, undotiertem Quarzglas hergestellt. Die über die mittlere Rautiefe $R_a$ charakterisierte Oberflächenrauigkeit beträgt weniger als 1 nm.

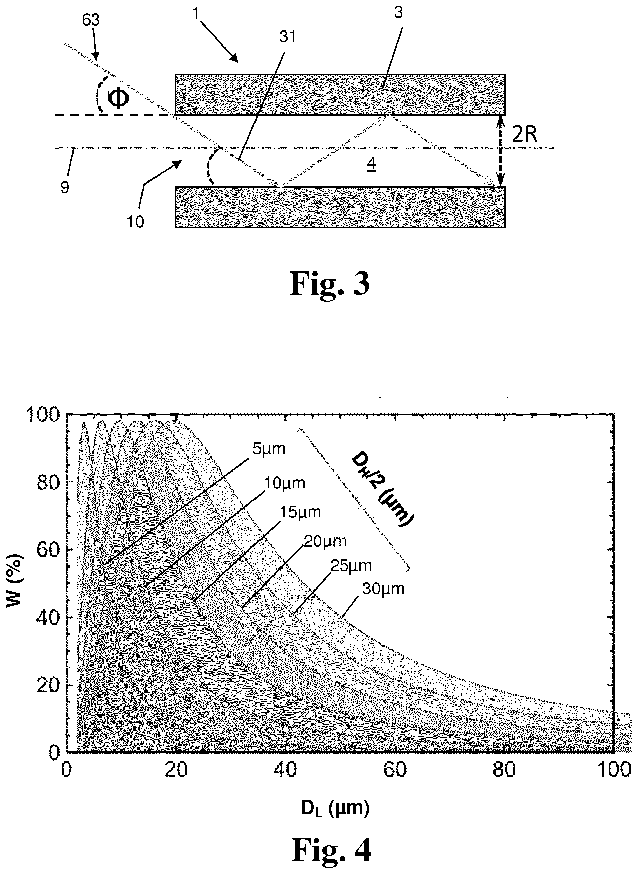

Die Skizze von **Figur 3** dient zu Verdeutlichung der Einkopplung des Laserlichtstrahls 63 an der Einkoppelstelle 10 in den mit der Messprobe gefüllten Hohlkanal 4. Der Lichtstrahl 63 hat bei Eintritt in den Hohlkanal 4 einen Einstrahlwinkel von weniger als 1 Grad. Der Einstrahlwinkel $\phi$ (phi) ergibt sich durch die Lösung der Strahlgleichung für die Grundmode 31. Er entspricht dem hohlkanalseitigen Akzeptanzwinkel für die Grundmode 31 (der dem halben Öffnungswinkel entspricht) und gleichzeitig dem Winkel, in dem die Grundmode im Hohlkanal 4 unter Heranziehung eines strahlenoptischen Modelansatzes geführt wird.

Im Diagramm von **Figur 4** ist für unterschiedliche Radien $D_H/2$ (in $\mu$m) die Kopplungseffizienz W (in %) für Lichtstrahlen 63 einer Wellenlänge von 532 nm in Abhängigkeit vom minimalen Strahldurchmesser $D_L$ (in $\mu$m) aufgetragen, für den Fall, dass der Hohlkanal 4 mit Wasser gefüllt ist und die Beleuchtung in Form eines Gauß'schen Lichtstrahles erfolgt, welcher auf die stirnseitige Öffnung (Einkoppelstelle 10) der Kapillare fokussiert wird. Der Brechungsindex von Wasser beträgt 1,33, so dass sich zur Hohlkanal-Wandung ein Brechzahlsprung von 0,1307 einstellt.

Demnach zeigt die Kopplungseffizienz für jeden Hohlkanal-Radius ein ausgeprägtes Maximum bei einem bestimmten Strahldurchmesser. Mit zunehmendem Hohlkanal-Radius verbreitert sich das Maximum und verschiebt sich gleichzeitig in Richtung größerer Strahldurchmesser.

Demnach ergibt sich für Hohlkanal-Radien bis etwa 30 $\mu$m ein optimaler Strahldurchmesser von etwa einem Drittel des Hohlkanal -Innendurchmessers. Für das Durchmesserverhältnis $D_L/D_H$ liegt das Optimum im Bereich von 0,3, wobei ein Grenzwert von wenigstens 20 % Kopplungseffizienz herangezogen wird.

Dies zeigt, dass die optimale Kopplung nicht erreicht wird, indem die Strahltaille des Lichtstrahles 63 auf den Durchmesser der Kapillarinnenwand gebracht wird, sondern der Zusammenhang einem komplexen, vom Kapillardurchmesser abhängigen Verlauf folgt.

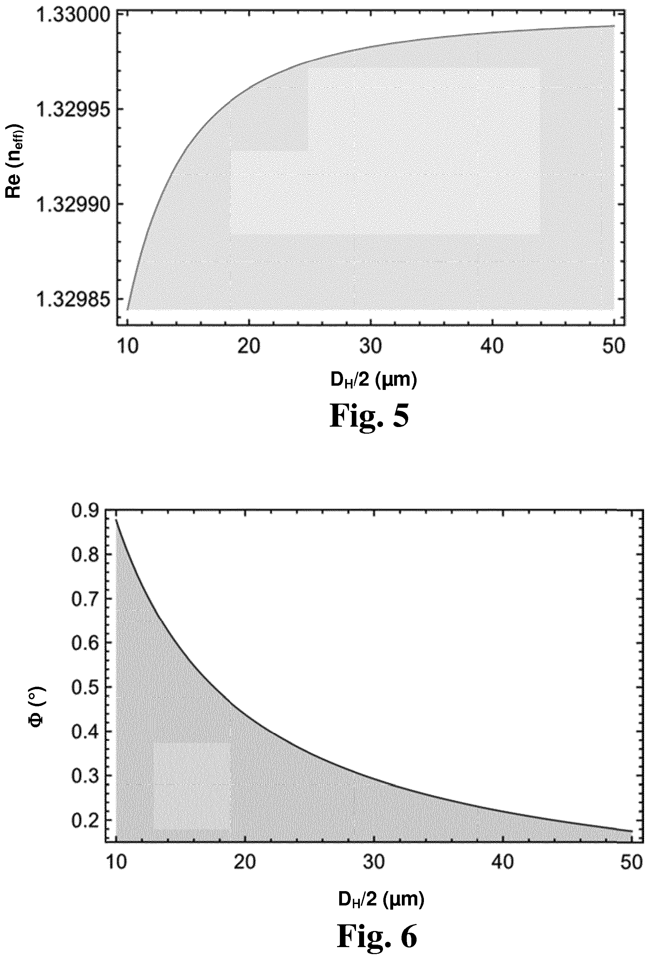

Im Diagramm von **Figur 5** ist im Fall eines mit Wasser gefüllten Hohlkanals 4 die effektive Brechzahl Re ($n_{eff}$) für einen Lichtstrahl der Wellenlänge 532 nm gegen den Hohlkanal-Radius $D_H/2$ (in $\mu$m) aufgetragen.

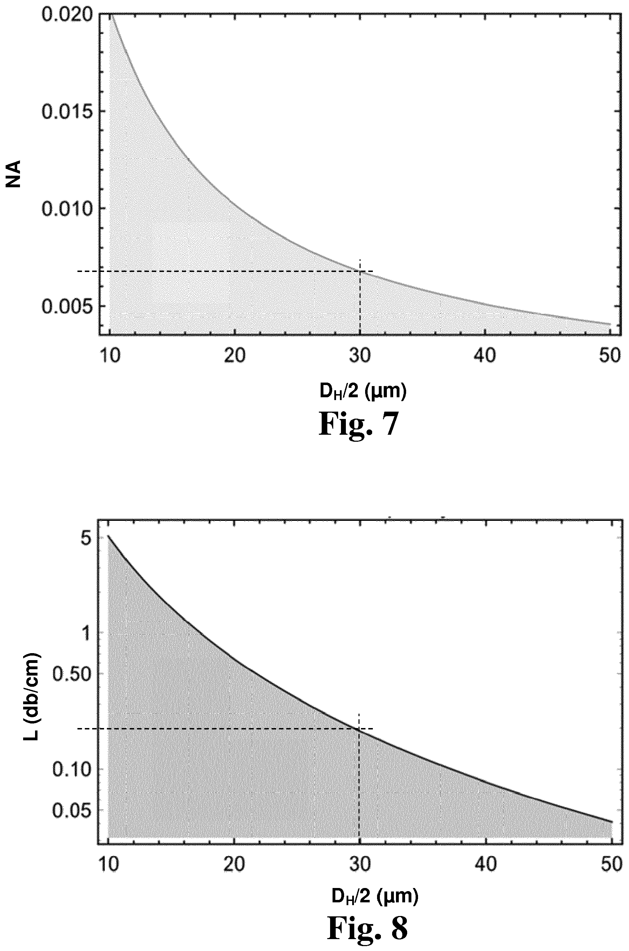

Dieser Wert beschreibt eine Kenngröße für die Form und Propagationsart der Grundmode der Kapillare und berechnet sich aus vollständiger Lösung der zugrundeliegenden Dispersionsgleichung. Hiermit lassen sich die in den folgenden Figuren 6 und 7 dargestellten Verläufe der anschaulichen Größen numerische Apertur und Divergenzwinkel derselben Mode berechnen. Im Diagramm von **Figur 6** ist der Reflexionswinkel $\phi$ (in Grad) der Grundmode für einen mit Wasser gefüllten Hohlkanal 4 gegen den Hohlkanal-Radius $D_H/2$ (in $\mu$m) aufgetragen.

Der Winkel ergibt sich dabei aus Lösung der zugrundeliegenden Gleichungen, die $n_{eff}$ liefern und sich in diesen Winkel umrechnen lassen. Dabei kann man den Winkel in einem strahlenoptischen Model interpretieren als den Winkel, in dem ein geführter Strahl der Grundmode innerhalb des Kanals von einer Wand reflektiert wird sowie gleichzeitig als Austrittswinkel dieses Strahls aus der Kapillare nach vollständigem Durchlauf. Zur Einkopplung mit maximaler Effizienz sollte das einfallende Licht in eben diesem Winkel auch auf die Kapillare geleitet werden.

Erkennen lässt sich dabei, dass mit zunehmendem Kanaldurchmesser der Reflexionswinkel stetig abnimmt. Das bedeutet, dass die Einkopplung in eine Kapillare mit zunehmend steigendem Kapillardurchmesser eines immer flacheren Einstrahlwinkels bedarf, um gleichbleibend effizient in die Grundmode einzukoppeln.

Im Diagramm von **Figur 7** ist bei einem mit Wasser gefüllten Hohlkanal 4 die numerische Apertur NA der Grundmode gegen den Hohlkanal-Radius $D_H/2$ (in $\mu$m) aufgetragen. Demnach nimmt die optimale NA mit zunehmendem Hohlkanal-Radius ab und erreicht bei einem Hohlkanal-Radius von 30 $\mu$m einen Wert von 0,007. Analog zum Verlauf des Reflexionswinkels lässt sich der Figur entnehmen, dass die NA des einzukoppelnden Lichtes mit steigendem Kapillardurchmesser zunehmend geringer werden muss, um gleich effizient in die Grundmode einzukoppeln.

Im Diagramm von **Figur 8** ist für den Fall eines mit Wasser gefüllten Hohlkanals 4 die optische Dämpfung L (in dB/cm) der in den Hohlkanal 4 innerhalb der Grundmode geführten Lichtintensität gegen den Hohlkanal-Radius $D_H/2$ (in $\mu$m) aufgetragen. Demnach nimmt die Dämpfung mit enger werdendem Hohlkanal rasch zu. Bei einem Hohlkanal-Radius von 30 $\mu$m unterliegt der Lichtstrahl einer theoretischen Dämpfung von etwa 0,2 dB/cm, und bei einem Hohlkanal-Radius von 10 $\mu$m unterliegt der Lichtstrahl einer theoretischen Dämpfung von etwa 5 dB/cm.

Zur Durchführung einer Messung werden die zu untersuchenden Partikel 5 in einem wässrigen Medium aufgenommen und als Flüssigkeitstropfen auf ein Ende der Kapillare gegeben. Durch die saugende Wirkung der Kapillarkraft wird die Flüssigkeit samt der enthaltenden Partikel in den Kapillarinnenraum gezogen und passiert dabei den durch das Mikroskop abgebildeten Messbereich Die numerische Apertur der optischen Faser 6 ist so ausgelegt, dass sich für den Laserstrahl 63 ein Einrittswinkel von weniger als 2 Grad einstellt.

Die Messprobe wird im Durchfluss durch den Hohlkanal 4 geführt, wobei die Partikel 5 in dem wässrigen Mediums frei innerhalb des Hohlkanals 4 diffundieren, zusätzlich zu einer gerichteten Bewegung durch die Füllung. Gleichzeitig wird über die optische Faser 6 ein Lichtstrahl 63 eines Nd:YAG-Lasers 2 in die Öffnung 10 des Hohlkanals 4 eingekoppelt, der dazu dient, die Partikel 5 in dem Hohlkanal 4 zu beleuchten. Je nach Polarisierbarkeit und Größe der Teilchen erzeugt die Beleuchtung Fluoreszenz und eine kohärente und/oder inkohärente Lichtstreuung. Ein Teil des Streulichts und Fluoreszenzlichts verlässt den Hohlkanal 4 durch die Kapillar-Wandung 3 und wird mittels der sCMOS-Kamera 8 erfasst. Das detektierte Streulicht wird anschließend mittels Software verarbeitet und ausgewertet. Infolge des kleinen Laserstrahl-Eintrittswinkels von weniger als 2 Grad und des Durchmesserverhältnis $D_L/D_H$ von 0,3 wird das nicht von den Partikeln 5 gestreute Laserlicht an der Hohlkanal-Innenwandung reflektiert und entlang des Hohlkanals 4 geführt. Infolge dieser Lichtführung und wegen der geringen Oberflächenrauigkeit der Innenwandung des Hohlkanals 4 ergibt sich entlang einer Signal-Erfassungslänge bis etwa 20 cm eine geringe Lichtdämpfung und damit einhergehend ein auswertbares Signal-Hintergrund- und Signal-Rausch-Verhältnis, so dass die Detektion jedes beleuchteten Partikels 5 innerhalb der Signal-Erfassungslänge ermöglicht wird.

Anstelle des Betriebes im Durchlauf der Messprobe bietet der Hohlkanal 4 auch die Möglichkeit des ein- oder zweidimensionalen Einschlusses des Probenvolumens, wodurch sich die zu untersuchenden Probenteilchen 5 über lange Messzeiten im Messbereich halten lassen.

**Patentansprüche**

1.   Vorrichtung zur Analyse von Partikeln, umfassend

 • eine Glas-Kapillare (1) als Messzelle mit einem Hohlkanal (4) zur Aufnahme oder Durchleitung einer die Partikel (5) enthaltenden Messprobe, der eine Hohlkanal-Längsachse (9) und eine Hohlkanal-Innenwandung (3) aufweist,
 • eine Lichtquelle (2) zur Erzeugung eines Lichtstrahls (63) und eine optische Einrichtung zur Einkopplung des Lichtstrahls (63) an einer Einkoppelstelle (10) in den Hohlkanal (4) zwecks Beleuchtung der Messprobe, wobei der Lichtstrahl (63) bei Eintritt in den Hohlkanal (4) einen Einstrahlwinkel $\Phi$ bezüglich der Hohlkanal-Längsache (9) von weniger als 2 Grad hat, und
 • einen Detektor (8) zur Erfassung von aus dem Hohlkanal (4) austretendem Streulicht,
 **dadurch gekennzeichnet,**
 • **dass** der Hohlkanal (4) einen Innendurchmesser $D_H$ im Bereich von 10 $\mu$m bis 60 $\mu$m aufweist, und
 • **dass** der Lichtstrahl (63) eine radiale Lichtintensitätsverteilung mit einem minimalen Strahldurchmesser $D_L$ hat, wobei für das Durchmesserverhältnis DL/DH gilt: 0,05<$D_L$/$D_H$<2,00.

2. Vorrichtung nach Anspruch 1, **dadurch gekennzeichnet, dass** die Glas-Kapillare (1) mindestens über eine Signal-Erfassungslänge gerade ist.

3. Vorrichtung nach Anspruch 1 oder 2, **dadurch gekennzeichnet, dass** die Glas-Kapillare (1) eine Hohlkanal-Wandung (3) mit einer Wandstärke von mindestens 100 $\mu$m, mindestens 500 $\mu$m und vorzugsweise mindestens 1000 $\mu$m sowie eine Wandstärke von maximal 10 mm, maximal 5 mm und vorzugsweise maximal 2 mm aufweist, und dass die Hohlkanal-Wandung (3) in radialer Richtung gesehen einen homogenen Brechzahlverlauf aufweist.

4. Vorrichtung nach einem der vorhergehenden Ansprüche, **dadurch gekennzeichnet, dass** die Glas-Kapillare (1) aus Quarzglas besteht.

5. Vorrichtung nach einem der vorhergehenden Ansprüche, **dadurch gekennzeichnet, dass** die optische Einrichtung (6) als Multimode-Lichtleitfaser oder als Singlemode-Lichtleitfaser mit einem Faserkern (61) und einem den Faserkern (61) umhüllenden Mantel (62) ausgebildet ist, und wobei die optische Faser eine numerische Apertur NA aufweist, für die gilt: NA < 0,05.

6. Vorrichtung nach einem der vorhergehenden Ansprüche, **dadurch gekennzeichnet, dass** der Hohlkanal (4) einen Innenquerschnitt mit mindestens einer Abflachung aufweist und/oder dass die Kapillare einen Außenquerschnitt mit mindestens einer Abflachung hat.

7. Vorrichtung nach Anspruch 6, **dadurch gekennzeichnet, dass** die Glas-Kapillare (1) in einem plattenförmigen Körper mit sich gegenüberliegenden Flachseiten ausgebildet ist, wobei die Flachseiten des Körpers Außenwandungen der Glas-Kapillare bilden.

8. Vorrichtung nach einem der vorhergehenden Ansprüche, **dadurch gekennzeichnet, dass** der Detektor (8) so ausgelegt ist, dass Streulicht entlang einer Signal-Erfassungslänge bis zu 20 cm erfassbar ist.

9. Vorrichtung nach einem der vorhergehenden Ansprüche, **dadurch gekennzeichnet, dass** die Glas-Kapillare (1) eine Hohlkanal-Wandung (3) mit einer Wandstärke von mindestens 100 $\mu$m, mindestens 500 $\mu$m und vorzugsweise mindestens 1000 $\mu$m, sowie eine Wandstärke von maximal 10 mm, maximal 5 mm und vorzugsweise maximal 2 mm aufweist, wobei die Hohlkanal-Wandung in radialer Richtung gesehen einen homogenen Brechzahlverlauf aufweist.

10. Vorrichtung nach einem der vorhergehenden Ansprüche, **dadurch gekennzeichnet, dass** die Hohlkanal-Innenwandung eine Oberflächenrauigkeit aufweist, die definiert ist durch eine mittlere Rautiefe $R_a$ von weniger als 1 nm.

11. Verfahren zur Analyse von Partikeln, umfassend die folgenden Verfahrensschritte:

• Breitstellen einer Messzelle in Form einer Glas-Kapillare (1) mit einem eine Hohlkanal-Längsachse (9) und eine Hohlkanal-Innenwandung aufweisenden Hohlkanal (4),
• Einbringen einer die Partikel (5) enthaltenden Messprobe in den Hohlkanal (4), wobei die Messprobe einen Brechungsindex $\Delta n_M$ aufweist
• Erzeugen eines Lichtstrahls (63) mittels einer Lichtquelle (2),
• Einkoppeln des Lichtstrahls (63) an einer Einkoppelstelle (10) in den Hohlkanal (4) zwecks Beleuchtung der Messprobe mittels einer optischen Einkoppel-Einrichtung (6), wobei der Lichtstrahl (63) bei Eintritt in den Hohlkanal (4) einen Einstrahlwinkel $\Phi$ bezüglich der Hohlkanal-Längsachse von weniger als 2 Grad hat, und
• Erfassen von aus dem Hohlkanal (4) austretendem Streulicht mittels eines Detektors (8),
**dadurch gekennzeichnet,**
• **dass** eine Messzelle eingesetzt wird, bei der der Hohlkanal (4) einen Innendurchmesser $D_H$ im Bereich von 10 $\mu$m bis 60 $\mu$m aufweist,
• **dass** der Lichtstrahl (63) eine radiale Lichtintensitätsverteilung mit einem minimalen Strahldurchmesser $D_L$ hat, wobei für das Durchmesserverhältnis $D_L$/$D_H$ gilt: 0,05<$D_L$/$D_H$<2,0.

12. Verfahren nach Anspruch 11, **dadurch gekennzeichnet, dass** die Glas-Kapillare (1) eine Hohlkanal-Wandung (3) mit einer Wandstärke von mindestens 100 $\mu$m, mindestens 500 $\mu$m und vorzugsweise mindestens 1000 $\mu$m sowie eine Wandstärke von maximal 10 mm, maximal 5 mm und vorzugsweise maximal 2 mm aufweist, und dass die Hohlkanal-Wandung (3) in radialer Richtung gesehen einen homogenen Brechzahlverlauf aufweist.

13. Verfahren nach Anspruch 11 oder 12, **dadurch gekennzeichnet, dass** eine Glas-Kapillare (1) aus Quarzglas eingesetzt wird.

14. Verfahren nach einem der Ansprüche 11 bis 13, **dadurch gekennzeichnet, dass** als optische Einrichtung (6) eine Multimode-Lichtleitfaser oder eine Singlemode-Lichtleitfaser mit einem Faserkern (61) und einem den Faserkern (61) umhüllenden Mantel (62) eingesetzt wird, und wobei die optische Faser eine numerische Apertur NA aufweist, für die gilt: NA < 0,05.

15. Verfahren nach einem der Ansprüche 11 bis 14, **dadurch gekennzeichnet, dass** die Messprobe einen Brechungsindex $\Delta n_M$ aufweist und dass das Glas der Kapillare (1) einen Brechungsindex $\Delta n_K$ aufweist, wobei gilt: $\Delta n_M < \Delta n_K$, vorzugsweise $\Delta n_M < \Delta n_K - 0,1$.

**Claims**

1. Device for analyzing particles, comprising

   • a glass capillary tube (1) as a measuring cell, comprising a hollow channel (4) for receiving or conducting a measurement sample containing the particles (5), said hollow channel having a hollow-channel longitudinal axis (9) and a hollow-channel inner wall (3),
   • a light source (2) for generating a light beam (63) and an optical apparatus for coupling the light beam (63) into the hollow channel (4) at a coupling site (10) for the purpose of illuminating the measurement sample, the light beam (63) having an angle of incidence $\Phi$ with respect to the hollow-channel longitudinal axis (9) of less than 2° when entering the hollow channel (4), and
   • a detector (8) for detecting scattered light emerging from the hollow channel (4), **characterized in that**
   • the hollow channel (4) has an internal diameter $D_H$ in the range from 10 $\mu$m to 60 $\mu$m, and
   • the light beam (63) has a radial light intensity distribution having a minimum beam diameter $D_L$, wherein the following applies to the diameter ratio $D_L/D_H$: $0.05 < D_L/D_H < 2.00$.

2. Device according to Claim 1, **characterized in that** the glass capillary tube (1) is straight at least over a signal detection length.

3. Device according to Claim 1 or 2, **characterized in that** the glass capillary tube (1) has a hollow-channel wall (3) having a wall thickness of at least 100 $\mu$m, at least 500 $\mu$m, and preferably at least 1000 $\mu$m, and a wall thickness of at most 10 mm, at most 5 mm, and preferably at most 2 mm, and the hollow-channel wall (3) has a homogeneous refractive index profile when viewed in the radial direction.

4. Device according to any of the preceding claims, **characterized in that** the glass capillary tube (1) consists of quartz glass.

5. Device according to any of the preceding claims, **characterized in that** the optical apparatus (6) is designed as a multi-mode optical fiber or a single-mode optical fiber having a fiber core (61) and a casing (62) that encases the fiber core (61), and the optical fiber having a numerical aperture NA to which the following applies: NA < 0.05.

6. Device according to any of the preceding claims, **characterized in that** the hollow channel (4) has an internal cross section having at least one flat part and/or the capillary tube has an external cross section having at least one flat part.

7. Device according to Claim 6, **characterized in that** the glass capillary tube (1) is formed in a plate-shaped body having opposite flat sides, the flat sides of the body forming outer walls of the glass capillary tube.

8. Device according to any of the preceding claims, **characterized in that** the detector (8) is configured such that scattered light can be detected along a signal detection length of up to 20 cm.

9. Device according to any of the preceding claims, **characterized in that** the glass capillary tube (1) has a hollow-channel wall (3) having a wall thickness of at least 100 $\mu$m, at least 500 $\mu$m, and preferably at least 1000 $\mu$m, and a wall thickness of at most 10 mm, at most 5 mm, and preferably at most 2 mm, the hollow-channel wall having a homogeneous refractive index profile when viewed in the radial direction.

10. Device according to any of the preceding claims, **characterized in that** the hollow-channel inner wall has a surface roughness defined by an average roughness depth $R_a$ of less than 1 nm.

11. Method for analyzing particles, comprising the following method steps:

    • providing a measuring cell in the form of a glass capillary tube (1) that comprises a hollow channel (4) having a hollow-channel longitudinal axis (9) and a hollow-channel inner wall,
    • introducing a measurement sample containing the particles (5) into the hollow channel (4), the measurement sample having a refractive index $\Delta n_M$,
    • generating a light beam (63) by means of a light source (2),
    • coupling the light beam (63) into the hollow channel (4) at a coupling site (10) for the purpose of illuminating the measurement sample by means of an optical coupling apparatus (6), the light beam (63) having an angle of incidence $\Phi$ with respect to the hollow-channel longitudinal axis of less than 2° when entering the hollow channel (4), and
• detecting scattered light emerging from the hollow channel (4) by means of a detector (8),

**characterized in that**

• a measuring cell is used in which the hollow channel (4) has an internal diameter $D_H$ in the range from 10 $\mu$m to 60 $\mu$m,
• the light beam (63) has a radial light intensity distribution having a minimum beam diameter $D_L$, wherein the following applies to the diameter ratio $D_L/D_H$: $0.05 < D_L/D_H < 2.0$.

12. Method according to Claim 11, **characterized in that** the glass capillary tube (1) has a hollow-channel wall (3) having a wall thickness of at least 100 $\mu$m, at least 500 $\mu$m, and preferably at least 1000 $\mu$m, and a wall thickness of at most 10 mm, at most 5 mm, and preferably at most 2 mm, and the hollow-channel wall (3) has a homogeneous refractive index profile when viewed in the radial direction.

13. Method according to Claim 11 or 12, **characterized in that** a glass capillary tube (1) made of quartz glass is used.

14. Method according to any of Claims 11 to 13, **characterized in that** a multi-mode optical fiber or a single-mode optical fiber comprising a fiber core (61) and a casing (62) that encases the fiber core (61) is used as the optical apparatus (6), and the optical fiber having a numerical aperture NA to which the following applies: NA < 0.05.

15. Method according to any of Claims 11 to 14, **characterized in that** the measurement sample has a refractive index $\Delta n_M$ and the glass of the capillary tube (1) has a refractive index $\Delta n_K$, wherein: $\Delta n_M < \Delta n_K$, preferably $\Delta n_M < \Delta n_K - 0.1$.

**Revendications**

1. Dispositif d'analyse des particules, comprenant

• un capillaire en verre (1) comme cellule de mesure comprenant un canal creux (4) pour la réception ou le passage d'un échantillon de mesure contenant les particules (5), lequel présente un axe longitudinal de canal creux (9) et une paroi interne de canal creux (3),
• une source lumineuse (2) pour la génération d'un faisceau lumineux (63) et un dispositif optique pour le couplage du faisceau lumineux (63) à un point de couplage (10) dans le canal creux (4) dans le but d'éclairer l'échantillon de mesure, le faisceau lumineux (63) ayant, lors de son entrée dans le canal creux (4), un angle d'incidence $\Phi$ par rapport à l'axe longitudinal de canal creux (9) inférieur à 2 degrés, et
• un détecteur (8) pour la détection de la lumière diffusée sortant du canal creux (4), **caractérisé en ce**
• **que** le canal creux (4) présente un diamètre interne $D_H$ dans la plage de 10 $\mu$m à 60 $\mu$m et
• **que** le faisceau lumineux (63) a une distribution d'intensité lumineuse radiale ayant un diamètre de faisceau minimal $D_L$, le rapport de diamètres $D_L/D_H$ satisfaisant :

$$0{,}05 < D_L/D_H < 2{,}00.$$

2. Dispositif selon la revendication 1, **caractérisé en ce que** le capillaire en verre (1) est rectiligne au moins sur une longueur de détection de signal.

3. Dispositif selon la revendication 1 ou 2, **caractérisé en ce que** le capillaire en verre (1) présente une paroi de canal creux (3) ayant une épaisseur de paroi d'au moins 100 $\mu$m, d'au moins 500 $\mu$m et de préférence d'au moins 1 000 $\mu$m, ainsi qu'une épaisseur de paroi de maximum 10 mm, de maximum 5 mm et de préférence de maximum 2 mm et que la paroi de canal creux (3) présente, vue dans la direction radiale, une courbe d'indice de réfraction homogène.

4. Dispositif selon l'une quelconque des revendications précédentes, **caractérisé en ce que** le capillaire en verre (1) est composé de verre de quartz.

5. Dispositif selon l'une quelconque des revendications précédentes, **caractérisé en ce que** le dispositif optique (6) est réalisé comme une fibre optique multimode ou une fibre optique monomode comprenant un cœur de fibre (61) et un manteau (62) entourant le cœur de fibre (61) et la fibre optique présentant une ouverture numérique NA qui satisfait : NA < 0,05.

6. Dispositif selon l'une quelconque des revendications précédentes, **caractérisé en ce que** le canal creux (4) présente une section transversale interne comprenant au moins un aplatissement et/ou que le capillaire a une section transversale externe comprenant au moins un aplatissement.

7. Dispositif selon la revendication 6, **caractérisé en ce que** le capillaire en verre (1) est réalisé dans un corps en forme de plaque comprenant des côtés plats opposés, les côtés plats du corps formant des parois externes du capillaire en verre.

**8.** Dispositif selon l'une quelconque des revendications précédentes, **caractérisé en ce que** le détecteur (8) est conçu de telle façon que la lumière diffusée peut être détectée le long d'une longueur de détection de signal de jusqu'à 20 cm.

**9.** Dispositif selon l'une quelconque des revendications précédentes, **caractérisé en ce que** le capillaire en verre (1) présente une paroi de canal creux (3) ayant une épaisseur de paroi d'au moins 100 $\mu$m, d'au moins 500 $\mu$m et de préférence d'au moins 1 000 $\mu$m, ainsi qu'une épaisseur de paroi de maximum 10 mm, de maximum 5 mm et de préférence de maximum 2 mm, la paroi de canal creux présentant, vue dans la direction radiale, une courbe d'indice de réfraction homogène.

**10.** Dispositif selon l'une quelconque des revendications précédentes, **caractérisé en ce que** la paroi interne de canal creux présente une rugosité de surface qui est définie par une rugosité moyenne $R_a$ de moins de 1 nm.

**11.** Procédé d'analyse des particules, comprenant les étapes de procédé suivantes :

• fourniture d'une cellule de mesure sous la forme d'un capillaire en verre (1) comprenant un canal creux (4) présentant un axe longitudinal de canal creux (9) et une paroi interne de canal creux,
• introduction d'un échantillon de mesure contenant les particules (5) dans le canal creux (4), l'échantillon de mesure présentant un indice de réfraction $\Delta n_M$
• génération d'un faisceau lumineux (63) au moyen d'une source lumineuse (2),
• couplage du faisceau lumineux (63) à un point de couplage (10) dans le canal creux (4) dans le but d'éclairer l'échantillon de mesure au moyen d'un dispositif de couplage optique (6), le faisceau lumineux (63) ayant, lors de son entrée dans le canal creux (4), un angle d'incidence $\Phi$ par rapport à l'axe longitudinal de canal creux inférieur à 2 degrés et
• détection de la lumière diffusée sortant du canal creux (4) au moyen d'un détecteur (8), **caractérisé en ce**
• **qu'**une cellule de mesure est utilisée, dans laquelle le canal creux (4) présente un diamètre interne $D_H$ dans la plage de 10 $\mu$m à 60 $\mu$m,
• **que** le faisceau lumineux (63) a une distribution d'intensité lumineuse radiale ayant un diamètre de faisceau minimal $D_L$, le rapport de diamètres $D_L/D_H$ satisfaisant :

$$0{,}05 < D_L/D_H < 2{,}0.$$

**12.** Procédé selon la revendication 11, **caractérisé en ce que** le capillaire en verre (1) présente une paroi de canal creux (3) ayant une épaisseur de paroi d'au moins 100 $\mu$m, d'au moins 500 $\mu$m et de préférence d'au moins 1 000 $\mu$m, ainsi qu'une épaisseur de paroi de maximum 10 mm, de maximum 5 mm et de préférence de maximum 2 mm et que la paroi de canal creux (3) présente, vue dans la direction radiale, une courbe d'indice de réfraction homogène.

**13.** Procédé selon la revendication 11 ou 12, **caractérisé en ce qu'**un capillaire en verre (1) composé de verre de quartz est utilisé.

**14.** Procédé selon l'une quelconque des revendications 11 à 13, **caractérisé en ce qu'**une fibre optique multimode ou une fibre optique monomode comprenant un cœur de fibre (61) et un manteau (62) entourant le cœur de fibre (61) est utilisée comme dispositif optique (6) et la fibre optique présentant une ouverture numérique NA qui satisfait : NA < 0,05.

**15.** Procédé selon l'une quelconque des revendications 11 à 14, **caractérisé en ce que** l'échantillon de mesure présente un indice de réfraction $\Delta n_M$ et que le verre du capillaire (1) présente un indice de réfraction $\Delta n_K$ satisfaisant : $\Delta n_M < \Delta n_K$, de préférence $\Delta n_M < \Delta n_K - 0{,}1$.

**Fig. 1**

30 µm

400 µm

**Fig. 2**

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013210259 A1
- WO 2016038015 A1
- WO 2016038108 A1
- JP 2006125901 A
- US 2014296089 A